# EUROPEAN PATENT APPLICATION

(11) **EP 3 287 869 A1**
(43) Date of publication of application: **28.02.2018**
(21) Application number: 16782489.5
(22) Date of filing: 04.03.2016
(51) Int. Cl.: G06F 3/01

(54) **REALIZATION METHOD AND SYSTEM OF MOTION DRIVING EFFECTS**

(30) Priority: 23.04.2015 CN 201510197278
(71) Applicant: Beijing Xiaoxiaoniu Creative Technologies Ltd., Beijing 100083 (CN)
(72) Inventor: CAO, Xiang, Beijing 100036 (CN)
(74) Representative: de Arpe Fernandez, Manuel
(86) International application number: PCT/CN2016/075590
(87) International publication number: WO 2016/169341

(57) **Abstract**

A method and system for achieving motion driven effect enable an abundant variable space for the driven effect. The method comprises: step 1: detecting, at a new time point, all unit motions in a target area, wherein each unit motion represents motion in a local area of the target area at the time point; step 2: creating, according to each unit motion, one particle or a set of particles, wherein all created particles constitute a particle system; and step 3: updating, according to behavioral parameters of each particle, a status thereof, determining and applying a driven effect generated by the particle system, and returning back to step 1 to proceed until motions in the target area are ended. The system comprises: a detecting module, a particle creating module, and a determining and applying effect module. The present invention is used to the field of human-computer interaction and computer graphics.

## Description

### TECHNICAL FIELD

The present disclosure relates to the field of human-computer interaction and computer graphics, and in particular, to a method and system for achieving motion driven effect.

### BACKGROUND

In recent years, a certain particular motion of a user (for example, a particular motion trail on a touch screen made by finger(s) of the user, or a particular motion of the user's hand or body on a motion sensing interface represented by Microsoft's Kinect, wherein, the motions of the hand are referred to as "gestures") on various new human-computer interaction interfaces is identified to trigger a certain particular operation result of a digital system (for example, tick on a touchscreen to represent an acceptance, or lift up right hand on the motion sensing interface to open a menu). This manner has a clear limit to motions that can be used by the user to trigger operations and operation results, and apparently cannot satisfy the need of the user when an application scenario for which a high degree of freedom is desired by the user is appeared.

In other words, the prior human-computer interaction interface in which the particular operation result is triggered by identifying the particular motion of the user has a clear limit to the user, as motions that can be used by the user to trigger operations and operation results are predefined by a system designer.

### SUMMARY

A method and system for achieving motion driven effect are provided to solve the technical problem in prior art that motions that can be used by the user to trigger operations and operation results are limited.

To solve the above technical problem, embodiments of the disclosure provide a method for achieving motion driven effect, comprising:
step 1: detecting, at a new time point, all of unit motions in a target area, wherein each unit motion represents motion in a local area of the target area at the time point;
step 2: creating, according to each of the unit motions, one particle or a set of particles, wherein all of the created particles constitute a particle system; and
step 3: updating, according to behavioral parameters of each particle, a status thereof, determining and applying a driven effect generated by the particle system, and returning back to step 1 to proceed until motions in the target area are ended.

Alternatively, detecting all of unit motions in the target area comprises:
performing filtration and selection to all of the unit motions in the target area in some manners, wherein, the manners include: corresponding to an object in the target area, a specified area of an object in the target area, or a specified motion of an object in the target area .

Alternatively, the unit motions include two dimensional motions or three dimensional motions.

Alternatively, detecting all of unit motions in the target area comprises:
capturing or recording in real time a frame of image in the target area, and determining a motion status of each local area in the frame of image; or,
determining a displacement of each touch point at the time of inputting via a touchscreen when the motions of the target areas is input via the touchscreen; or
reading a motion status of a virtual object directly when motions in the target areas are motions of the virtual object in a virtual scene.

Alternatively, creating, according to each of the unit motions, one particle or a set of particles, wherein all of the created particles constitute a particle system comprises:
creating, according to each of the selected unit motions, one particle or a set of particles, wherein, the behavioral parameters of the particle(s) are determined by unit motions creating the particle(s).

Alternatively, the fact that behavioral parameters of the particle(s) are determined by unit motions creating the particle(s) comprises:
a location, a motion direction and a velocity of the particle(s) are determined by a location, a motion direction and a velocity of unit motions creating the particle(s);
behavioral parameters except the location, the motion direction and the velocity of the particle(s) are determined by characteristics of unit motions creating the particle(s), or are set as predefined values .

Alternatively, the driven effect generated by the particle system comprises:
a visual effect rendered by the particle system; or
displaying in a superimposed manner on the motion of the driven effect via augmented reality; or,
an interaction effect interacting with a virtual scene; or
an invisible effect generated by the particle system.

Embodiments of the present disclosure provide a system for achieving motion driven effect, comprising:
a detecting module configured to detect, at a new time point, all of unit motions in a target area, wherein each unit motion represents motion in a local area of the target area at the time point;
a particle creating module configured to create, according to each of the unit motions, one particle or a set of particles, wherein all of the created particles constitute a particle system; and
a determining and applying effect module configured to update, according to behavioral parameters of each particle, a status thereof, determine and apply a driven effect generated by the particle system, and return back to the detecting module to proceed until motions in the target area are ended.

Alternatively, detecting module is further configured to:
perform filtration and selection to all of the unit motions in the target area in some manners, wherein, the manners include: corresponding to an object in the target area, a specified area of an object in the target area, or a specified motion of an object in the target area;
the unit motions include two dimensional motions or three dimensional motions.

Alternatively, detecting module comprises:
a first detecting sub-module configured to capture or record in real time a frame of image in the target area, and determine a motion status of each local area in the frame of image; or,
a second detecting sub-module configured to determine a displacement of each touch point at the time of inputting via a touchscreen when the motions of the target areas is input via the touchscreen; or
a third detecting sub-module configured to read a motion status of a virtual object directly when motions in the target areas are motions of the virtual object in a virtual scene.

Alternatively, the particle creating module is further configured to:
create, according to each of the selected unit motions, one particle or a set of particles, wherein, the behavioral parameters of the particle(s) are determined by unit motions creating the particle(s).

Alternatively, the fact that behavioral parameters of the particle(s) are determined by unit motions creating the particle(s) comprises:
a location, a motion direction and a velocity of the particle(s) are determined by a location, a motion direction and a velocity of unit motions creating the particle(s);
behavioral parameters except the location, the motion direction and the velocity of the particle(s) are determined by characteristics of unit motions creating the particle(s), or are set as predefined values.

Alternatively, the determining and applying effect module comprises:
a first determining and applying effect module configured to determine and apply a visual effect rendered by the particle system; or
a second determining and applying effect module configured to display in a superimposed manner on the motion of the driven effect via augmented reality; or,
a third determining and applying effect module configured to determine and apply an interaction effect interacting with a virtual scene; or
a fourth determining and applying effect module configured to determine and apply an invisible effect generated by the particle system.

The above technical schemes provide the following technical benefits:
In the above schemes, by means of continuously detecting all of unit motions in a target area at various time points, correspondingly creating, according to each of the detected unit motions, one particle or a set of particles, wherein all of the created particles constitute a particle system, and updating, according to behavioral parameters of each particle, a status thereof, determining a driven effect generated by the particle system, and applying the driven effect, it is not needed to learn particular motions under an application scenario for which a high degree of freedom is desired by the user, and a corresponding driven effect is produced via various motions. The driven effect is not limited to one or more preset driven effect, and corresponds to variable space of the motion per se, thereby achieving abundant variable spaces. Thus, the existed limits in terms of motions that can be used by the user to trigger operations and operation results can be break.

### BRIEF DESCRIPTION OF THE DRAWINGS

FIG. 1 is a flowchart of a method for achieving motion driven effect, provided in an embodiment of the present disclosure;
FIG. 2(a) is schematic diagram of a first motion driven effect provided in an embodiment of the present disclosure;
FIG. 2(b) is schematic diagram of a second motion driven effect provided in an embodiment of the present disclosure;
FIG. 2(c) is schematic diagram of a third motion driven effect provided in an embodiment of the present disclosure;
FIG. 3(a) is schematic diagram of a fourth motion driven effect provided in an embodiment of the present disclosure;
FIG. 3(b) is schematic diagram of a fifth motion driven effect provided in an embodiment of the present disclosure;
FIG. 3(c) is schematic diagram of a sixth motion driven effect provided in an embodiment of the present disclosure.

### DETAILED DESCRIPTION

To make the technical problem, technical solutions, and advantages of the present disclosure clearer, embodiments of the present disclosure are described in detail below with reference to the accompanying drawings.

For the problem in prior art that motions that can be used by the user to trigger operations and operation results are clearly limited, a method and system for achieving motion driven effect are provided in the disclosure.

In the embodiments of the present disclosure, to facilitate better understanding of the present disclosure, a particle system is first brief described. In computer graphics, particle system is often used to simulate phenomena that are changed dynamically and have a certain randomness, like flame, explosion, fume, water flow, spark, fallen leaves, cloud, fog, snow, dust, meteor and so forth. The particle system is formed by a set of virtual particles, each of which has its status like location, size, motion and so forth, and is updated dynamically. The set of virtual particles complies with a set of common behavioral parameters (initial velocity, acceleration, lifetime and so forth, and a range of these behavioral parameters that can be allowed to change at random). The set of the virtual particles constitutes the effect of the simulated phenomena. The set of general behavioral parameters is shared by all of particles, and usually preset by the system designer. Thus, the set of behavioral parameters predetermine (in a certain dynamic random range) the overall effect of the particle system. Different from the common particle system in which all particles share a set of common behavioral parameters, the behavioral parameters for each particle or each set of particles in the present disclosure is respectively determined by unit motions creating the particles. Thus, the driven effect produced by the particle system can be sufficient to reflect dynamic change of motions driving the particle system.

### Embodiment 1

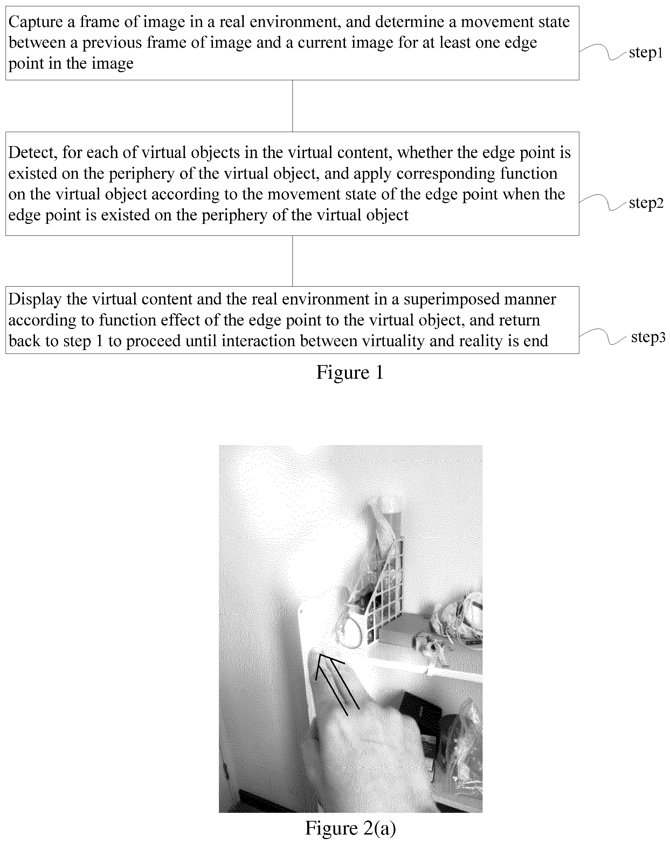

As shown in FIG. 1, an embodiment of the present disclosure provides a method for achieving motion driven effect, including:
step 1: detecting, at a new time point, all of unit motions in a target area, wherein each unit motion represents motion in a local area of the target area at the time point;
step 2: creating, according to each of the unit motions, one particle or a set of particles, wherein all of the created particles constitute a particle system; and
step 3: updating, according to behavioral parameters of each particle, a status thereof, determining and applying a driven effect generated by the particle system, and returning back to step 1 to proceed until motions in the target area are ended.

In the method for achieving motion driven effect according to the embodiment of the present disclosure, by means of continuously detecting all of unit motions in a target area at various time points, correspondingly creating, according to each of the detected unit motions, one particle or a set of particles, wherein all of the created particles constitute a particle system, and updating, according to behavioral parameters of each particle, a status thereof, determining a driven effect generated by the particle system, and applying the driven effect, it is not needed to learn particular motions under an application scenario for which a high degree of freedom is desired by the user, and a corresponding driven effect is produced via various motions. The driven effect is not limited to one or more preset driven effect, and corresponds to variable space of the motion per se, thereby achieving abundant variable spaces. Thus, the existed limits in terms of motions that can be used by the user to trigger operations and operation results can be break.

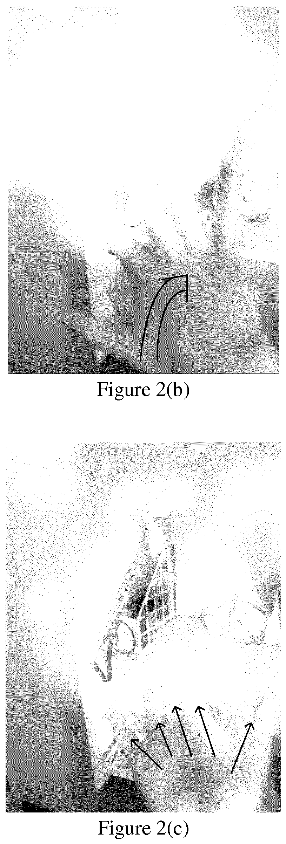

In the present disclosure, wherein each unit motion represents motion in a local area of the target area at a certain time point, the application scenario can be the scenario of human-computer interaction, for example, electronic games for human-computer interaction. It is not needed to learn particular motions when a greater degree of freedom is desired by the user, and the corresponding effects are produced by various motion made by the user. For example, in a magic game, a flame is presented with random gesture, where distribution and condition for the flame is changed with the change of the gesture. Reference to figure 2(a)-(c), where an arrow represent motion, the driven effect produced by the user's gesture is not limited to a certain or some preset effect, but corresponds to variable space of the user per se, thereby achieving an abundant variable space.

In the embodiment of the disclosure, in addition to the driven effect produced with user's motion in a human-computer interaction scenario, an additional effect can be added based on a virtual object in a virtual scene (such as virtual object in a electronic game) or motion of a real object in a real environment (such as, in video captured or recorded by a camera in real time). For example, a fume can be display around any object in motion in a scene of desert, which is consistent with its characteristic of motion.

In a specific implementation of the above method for achieving motion driven effect, alternatively, detecting all of unit motions in the target area comprises:
performing filtration and selection to all of the unit motions in the target area in some manners, wherein, the manners include: corresponding to an object in the target area, a specified area of an object in the target area, or a specified motion of an object in the target area.

In the embodiment of the disclosure, performing filtration and selection to the unit motions can be conducted in some manners according to a specific application scenario at the time of detecting motions in the target area. For example, in the human-computer interaction scenario of an electronic game, when only the user's hand is preassigned to be allowed to interact with the electronic game, the filtration and the selection to all of the unit motions in the target area is performed according to the user's hand. Depending on a specific application scenario, the filtration and the selection to all of the unit motions in the target area can be performed according to a specified area of an object in the target area (such as, an edge of the object) or a specified motion of the object in the target area (such as, the motion direction is within a certain range of angle).

In a specific implementation of the above method for achieving motion driven effect, alternatively, the unit motions include two dimensional motions or three dimensional motions.

In the embodiment of the disclosure, whether the unit motion is two dimensional motions or three dimensional motion depends on the motion of virtual object in a virtual scene corresponding to the unit motion, the motion of real object in a real environment or the motion of object in a human-computer interaction scenario (including the user's motion).

In a specific implementation of the above method for achieving motion driven effect, alternatively, detecting all of unit motions in the target area comprises:
capturing or recording in real time a frame of image in the target area, and determining a motion status of each local area in the frame of image; or,
determining a displacement of each touch point at the time of inputting via a touchscreen when the motions of the target areas is input via the touchscreen; or
reading a motion status of a virtual object directly when motions in the target areas are motions of the virtual object in a virtual scene.

In the embodiment of the disclosure, at a new time point, all of unit motions in the target area are detected according to input event. The input event can be motion of the user in a real environment or motion of other real object, and can be motion of a virtual object in a virtual scene. The input event includes but not limited to the following specific scenario: an image of a frame captured in real time, a input update of a touchscreen, motion of virtual object in a virtual scene, and any other form of input event. The manner of detecting depends on the form of the input event. When the input event is based on the image of the frame in a video captured or recorded in real time, a motion detection algorithm in computer vision can be used to determine motion in each local area of the image of the frame. When the input event is based on the touchscreen input, the displacement for each touch point when the touchscreen input is made is determined. When the input event is based on motion of virtual object in the virtual scene, the status of motion for the virtual object can be read directly.

In a specific implementation of the above method for achieving motion driven effect, alternatively, creating, according to each of the unit motions, one particle or a set of particles, wherein all of the created particles constitute a particle system comprises:
creating, according to each of the selected unit motions, one particle or a set of particles, wherein, the behavioral parameters of the particle(s) are determined by unit motions creating the particle(s).

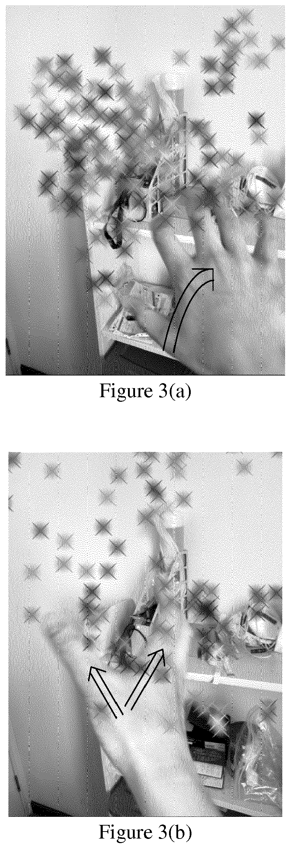

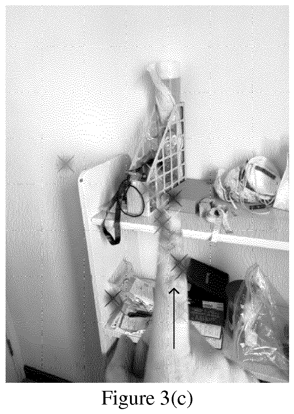

In the embodiment of the disclosure, unlike the ordinary particle system in which all of the particles share a set of common behavioral parameters, one particle or a set of particles is created according to each of the selected unit motions, and behavioral parameters for each particle or each set of particles are determined respectively by the unit motion(s) of the particle(s). Thus, the driven effect produced by the particle system can be sufficient to reflect dynamic change of motions driving the particle system. Reference to figure 3(s)-(c), where an arrow represent motion, each star is a particle, the flame shown in figure 2(a)-(c) and other visual effect can be displayed via different rendering manner. Taking the motion of the user's hand as an example, different driven effects can be achieved according to different gestures.

In a specific implementation of the above method for achieving motion driven effect, alternatively, the fact that behavioral parameters of the particle(s) are determined by unit motions creating the particle(s) comprises:
a location, a motion direction and a velocity of the particle(s) are determined by a location, a motion direction and a velocity of unit motions creating the particle(s);
behavioral parameters except the location, the motion direction and the velocity of the particle(s) are determined by characteristics of unit motions creating the particle(s), or are set as predefined values.

In the embodiment of the disclosure, the location, the motion direction and the velocity of the particle(s) are equivalent to or follow a certain transformation relationship with the location, the motion direction and the velocity of unit motions creating the particle(s). Behavioral parameters except the location, the motion direction and the velocity of the particle(s) (such as size, amount, lifetime and so forth of the particle) can be determined by characteristics of unit motions creating the particle(s), can be set as predefined values, and can be determined by other information forming the motion driven system .

In a specific implementation of the above method for achieving motion driven effect, alternatively, the driven effect generated by the particle system comprises:
a visual effect rendered by the particle system; or
displaying in a superimposed manner on the motion of the driven effect via augmented reality; or,
an interaction effect interacting with a virtual scene; or
an invisible effect generated by the particle system.

In the embodiment of the disclosure, the driven effect of the particle system is determined and applied according to behavioral parameters of each particle in the particle system. The driven effect generated by the particle system can be varied based on a specific application scenario. The driven effect can be the visual effect rendered by the particle system, can be displayed in a superimposed manner on the motion of the driven effect via augmented reality, can be the invisible effect generated by the particle system, and can be the interaction effect interacting with a virtual scene, such as health point of the enemy can be reduced according to the number of particles hit the enemy in an electronic game.

### Embodiment 2

Specific embodiments of a system for achieving motion driven effect are also provided in the disclosure. Since the system for achieving motion driven effect corresponds the method for achieving motion driven effect, the system for achieving motion driven effect can achieve the objective of the disclosure by performing steps in the process of the method. Thus, the explanation in the method for achieving motion driven effect can also suitable for specific embodiments of the system for achieving motion driven effect, and will not be detailed any more in the following embodiments.

Embodiments of the present disclosure provide a system for achieving motion driven effect, comprising:
a detecting module configured to detect, at a new time point, all of unit motions in a target area, wherein each unit motion represents motion in a local area of the target area at the time point;
a particle creating module configured to create, according to each of the unit motions, one particle or a set of particles, wherein all of the created particles constitute a particle system; and
a determining and applying effect module configured to update, according to behavioral parameters of each particle, a status thereof, determine and apply a driven effect generated by the particle system, and return back to step 1 to proceed until motions in the target area are ended.

In the system for achieving motion driven effect according to the embodiment of the present disclosure, by means of continuously detecting all of unit motions in a target area at various time points, correspondingly creating, according to each of the detected unit motions, one particle or a set of particles, wherein all of the created particles constitute a particle system, and updating, according to behavioral parameters of each particle, a status thereof, determining a driven effect generated by the particle system, and applying the driven effect, it is not needed to learn particular motions under a application scenario for which a high degree of freedom is desired by the user, and a corresponding driven effect is produced via various motions. The driven effect is not limited to one or more preset driven effect, and corresponds to variable space of the motion per se, thereby achieving abundant variable spaces. Thus, the existed limits in terms of motions that can be used by the user to trigger operations and operation results can be break.

In a specific implementation of the above system for achieving motion driven effect, alternatively, detecting module is further configured to:
perform filtration and selection to all of the unit motions in the target area in some manners, wherein, the manners include: corresponding to an object in the target area, a specified area of an object in the target area, or a specified motion of an object in the target area;
the unit motions include two dimensional motions or three dimensional motions.

In a specific implementation of the above system for achieving motion driven effect, alternatively, detecting module comprises:
a first detecting sub-module configured to capture or record in real time a frame of image in the target area, and determine a motion status of each local area in the frame of image; or,
a second detecting sub-module configured to determine a displacement of each touch point at the time of inputting via a touchscreen when the motions of the target areas is input via the touchscreen; or
a third detecting sub-module configured to read a motion status of a virtual object directly when motions in the target areas are motions of the virtual object in a virtual scene.

In a specific implementation of the above system for achieving motion driven effect, alternatively, the particle creating module is further configured to:
create, according to each of the selected unit motions, one particle or a set of particles, wherein, the behavioral parameters of the particle(s) are determined by unit motions creating the particle(s).

In a specific implementation of the above system for achieving motion driven effect, alternatively, the fact that behavioral parameters of the particle(s) are determined by unit motions creating the particle(s) comprises:
a location, a motion direction and a velocity of the particle(s) are determined by a location, a motion direction and a velocity of unit motions creating the particle(s);
behavioral parameters except the location, the motion direction and the velocity of the particle(s) are determined by characteristics of unit motions creating the particle(s), or are set as predefined values.

In a specific implementation of the above system for achieving motion driven effect, alternatively, the determining and applying effect module comprises:
a first determining and applying effect module configured to determine and apply a visual effect rendered by the particle system; or
a second determining and applying effect module configured to display in a superimposed manner on the motion of the driven effect via augmented reality; or,
a third determining and applying effect module configured to determine and apply an interaction effect interacting with a virtual scene; or
a fourth determining and applying effect module configured to determine and apply an invisible effect generated by the particle system.

Described above are merely preferred embodiments of the present disclosure. It is noted that for those skilled in the art, any modification and improvement can be made without departing from the principle of the present disclosure, and these modification and improvement should fall within the protection scope of the present disclosure.

## Claims

1. A method for achieving motion driven effect, comprising:
step 1: detecting, at a new time point, all of unit motions in a target area, wherein each unit motion represents motion in a local area of the target area at the time point;
step 2: creating, according to each of the unit motions, one particle or a set of particles, wherein all of the created particles constitute a particle system; and
step 3: updating, according to behavioral parameters of each particle, a status thereof, determining and applying a driven effect generated by the particle system, and returning back to step 1 to proceed until motions in the target area are ended.

2. The method according to claim 1, wherein, detecting all of unit motions in the target area comprises:
performing filtration and selection to all of the unit motions in the target area in some manners, wherein, the manners include: corresponding to an object in the target area, a specified area of an object in the target area, or a specified motion of an object in the target area.

3. The method according to claim 2, wherein, the unit motions include two dimensional motions or three dimensional motions.

4. The method according to claim 3, wherein, detecting all of unit motions in the target area comprises:
capturing or recording in real time a frame of image in the target area, and determining a motion status of each local area in the frame of image; or,
determining a displacement of each touch point at the time of inputting via a touchscreen when the motions of the target areas is input via the touchscreen; or
reading a motion status of a virtual object directly when motions in the target areas are motions of the virtual object in a virtual scene.

5. The method according to claim 3, wherein, creating, according to each of the unit motions, one particle or a set of particles, wherein all of the created particles constitute a particle system comprises:
creating, according to each of the selected unit motions, one particle or a set of particles, wherein, the behavioral parameters of the particle(s) are determined by unit motions creating the particle(s).

6. The method according to claim 5, wherein, the fact that behavioral parameters of the particle(s) are determined by unit motions creating the particle(s) comprises:
a location, a motion direction and a velocity of the particle(s) are determined by a location, a motion direction and a velocity of unit motions creating the particle(s);
behavioral parameters except the location, the motion direction and the velocity of the particle(s) are determined by characteristics of unit motions creating the particle(s), or are set as predefined values.

7. The method according to claim 6, wherein, the driven effect generated by the particle system comprises:
a visual effect rendered by the particle system; or
displaying in a superimposed manner on the motion of the driven effect via augmented reality; or,
an interaction effect interacting with a virtual scene; or
an invisible effect generated by the particle system.

8. A system for achieving motion driven effect, comprising:
a detecting module configured to detect, at a new time point, all of unit motions in a target area, wherein each unit motion represents motion in a local area of the target area at the time point;
a particle creating module configured to create, according to each of the unit motions, one particle or a set of particles, wherein all of the created particles constitute a particle system; and
a determining and applying effect module configured to update, according to behavioral parameters of each particle, a status thereof, determine and apply a driven effect generated by the particle system, and return back to the detecting module to proceed until motions in the target area are ended.

9. The system according to claim 8, wherein, detecting module is further configured to:
perform filtration and selection to all of the unit motions in the target area in some manners, wherein, the manners include: corresponding to an object in the target area, a specified area of an object in the target area, or a specified motion of an object in the target area;
the unit motions include two dimensional motions or three dimensional motions.

10. The system according to claim 9, wherein, the detecting module comprises:
a first detecting sub-module configured to capture or record in real time a frame of image in the target area, and determine a motion status of each local area in the frame of image; or,
a second detecting sub-module configured to determine a displacement of each touch point at the time of inputting via a touchscreen when the motions of the target areas is input via the touchscreen; or
a third detecting sub-module configured to read a motion status of a virtual object directly when motions in the target areas are motions of the virtual object in a virtual scene.

11. The system according to claim 9, wherein, the particle creating module is further configured to:
create, according to each of the selected unit motions, one particle or a set of particles, wherein, the behavioral parameters of the particle(s) are determined by unit motions creating the particle(s).

12. The system according to claim 11, wherein, the fact that behavioral parameters of the particle(s) are determined by unit motions creating the particle(s) comprises:
a location, a motion direction and a velocity of the particle(s) are determined by a location, a motion direction and a velocity of unit motions creating the particle(s);
behavioral parameters except the location, the motion direction and the velocity of the particle(s) are determined by characteristics of unit motions creating the particle(s), or are set as predefined values.

13. The system according to claim 12, wherein, the determining and applying effect module comprises:
a first determining and applying effect module configured to determine and apply a visual effect rendered by the particle system; or
a second determining and applying effect module configured to display in a superimposed manner on the motion of the driven effect via augmented reality; or,
a third determining and applying effect module configured to determine and apply an interaction effect interacting with a virtual scene; or
a fourth determining and applying effect module configured to determine and apply an invisible effect generated by the particle system.
